# EUROPÄISCHE PATENTANMELDUNG

(11) **EP 4 478 474 A1**
(43) Veröffentlichungstag der Anmeldung: **18.12.2024**
(21) Anmeldenummer: 23179833.1
(22) Anmeldetag: 16.06.2023
(51) Int. Cl.: H01M 10/42, H01M 10/54, H01M 10/0525, H01M 6/50, H01M 6/52, H01M 50/342, G01N 1/22

(54) **VERFAHREN ZUR ERKENNUNG UND ZUM RECYCLING VON SCHADHAFTEN BATTERIEN**

(71) Anmelder: Siemens Aktiengesellschaft, 80333 München (DE)
(72) Erfinder: Baldauf, Manfred, 91056 Erlangen (DE); Franke, Martin, 14089 Berlin (DE); Schulte, Sascha, 91315 Höchstadt (DE)
(74) Vertreter: Siemens Patent Attorneys

(57) **Zusammenfassung**

Es wird ein Verfahren zur Erkennung einer schadhaften Batterie, wobei die Batterie ein Gehäuse mit wenigstens einem Innenraum aufweist, vorgeschlagen. Das Verfahren ist gekennzeichnet dadurch, dass eine Probe der Innenraumluft des Innenraumes entnommen und bezüglich einer oder mehrerer Substanzen analysiert wird, wobei in Abhängigkeit der ermittelten Substanzen und/oder ihrer Konzentrationen erkannt wird, ob die Batterie schadhaft ist.

Weiterhin betrifft die Erfindung ein Verfahren zum Recycling von Batterien.

## Beschreibung

Die Erfindung betrifft ein Verfahren gemäß dem Oberbegriff des Patentanspruches 1 sowie ein Verfahren gemäß dem Oberbegriff des Patentanspruches 8.

Batterien, insbesondere Speicherbatterien für elektrische Fahrzeuge sowie Batterien für vergleichbare Anwendungen, müssen nach Ablauf ihrer regulären Lebensdauer für das finale Recycling geöffnet und zerlegt werden. Weiterhin können Batterien während ihrer vorgesehenen Lebensdauer zu Reparaturzwecken geöffnet werden.

In den beiden genannten Fällen oder vergleichbaren Fällen ist es möglich, dass Batterien schadhaft sind, das heißt bereits eine Vorschädigung aufweisen. Beispielsweise könnte durch eine solche Vorschädigung die Batterie intern nahezu vollständig zerstört sein. Typischerweise sind solche Schädigungen nur schwer von außen erkennbar.

Aufgrund der typischerweise gefährlichen Stoffe und Materialien, die in den Zellen der Batterie verbaut sind oder die als Reaktionsprodukt nach einem Brand entstehen können, geht von schadhaften Batterien eine latente Gefahr aus. Bei einer unsachgemäßen Öffnung im Rahmen des Batterierecyclings des normalerweise luftdichten Gehäuses der Batterie könnten bei einer schadhaften Batterie giftige Stoffe unkontrolliert entweichen und ein Risiko für Personal, Umwelt und Maschinen darstellen.

Eine schadhafte Batterie könnte über ihr Batterie-Management-System erkannt werden. Sind die Daten des Batterie-Management-Systems unauffällig, kann von einer schadfreien Batterie ausgegangen werden. Mit anderen Worten liegen in diesem Fall voraussichtlich keine internen Defekte vor. Allerdings stellen nicht alle Batterie-Management-Systeme solche Daten bereit, sodass in solchen Fällen das Erkennen eines internen Schadens nicht möglich ist.

Weiterhin könnte eine schadhafte Batterie an einer geborstenen Berstmembran beziehungsweise Berstscheibe erkannt werden. Mit anderen Worten kann das Vorfinden einer geöffneten Berstmembran oder Berstscheibe ein guter, jedoch nicht hinreichender Hinweis auf schwere Komplikationen innerhalb der Batterie sein. Allerdings können Schäden beziehungsweise Fehler auftreten, die zu einem langsamen Brand führen oder zu so geringen Überdrücken führen, die nicht ausreichend zum Bersten der Berstmembran sind. Mit anderen Worten ist das Vorhandensein einer intakten Berstmembran beziehungsweise Berstscheibe kein hinreichender Indikator für eine schadfreie Batterie.

Der vorliegenden Erfindung liegt die Aufgabe zugrunde, ein verbessertes Verfahren zur Erkennung einer schadhaften Batterie bereitzustellen.

Die Aufgabe wird durch ein Verfahren mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Das erfindungsgemäße Verfahren zur Erkennung einer schadhaften Batterie, wobei die Batterie ein Gehäuse mit wenigstens einem Innenraum aufweist, ist gekennzeichnet dadurch, dass eine Probe der Innenraumluft des Innenraumes entnommen und bezüglich einer oder mehrerer Substanzen analysiert wird, wobei in Abhängigkeit der ermittelten Substanzen und/oder ihrer Konzentrationen erkannt wird, ob die Batterie schadhaft ist.

Substanzen können beispielsweise Elemente, Verbindungen und/oder Gemische von chemischen Stoffen sein. Diese können in jedem Aggregatzustand vorliegen. Hierbei wird auf Substanzen geprüft, die einen Rückschluss auf das Vorhandensein eines Schadens ermöglichen.

Eine schadhafte Batterie kann eine Batterie sein, die einen internen Schaden aufweist, beispielsweise teilweise intern zerstört ist und/oder bei welcher aufgrund eines Schadens Stoffe freigesetzt werden, die im Normalbetrieb der Batterie nicht oder nur in bestimmten Konzentrationen freigesetzt werden.

Gemäß der vorliegenden Erfindung wird eine schadhafte Batterie durch eine Analyse der Innenraumluft innerhalb der Batterie erkannt. Mit anderen Worten wird eine Probe der Innenraumluft der Batterie entnommen und bezüglich bestimmter Substanzen und/oder ihrer Konzentrationen analysiert. Hierbei kann eine Stoffmengenkonzentration, eine Massenkonzentration, eine Volumenkonzentration oder eine Teilchendichte verwendet werden.

Typischerweise entstehen bei einem Fehler/Schaden innerhalb der Batterie, beispielsweise einem thermischen Ereignis oder einem Brand, Reaktionsprodukte (Substanzen), die in der Innenraumluft nachweisbar und somit erfassbar sind.

Die Analyse erfolgt hierbei mittels einer Messvorrichtung, die dazu ausgebildet ist, eine oder mehrere dieser Substanzen und/oder deren Konzentrationen zu ermitteln. Hierbei kann bereits das grundsätzliche Vorhandensein einer bestimmten Substanz einen hinreichenden Hinweis auf das Vorhandensein eines Schadens liefern. Alternativ oder ergänzend kann die Überschreitung eines Schwellenwertes bezüglich der Konzentration einen Schaden anzeigen.

Durch die erfindungsgemäße Analyse der Innenraumluft der Batterie kann somit ein Schaden und somit eine schadhafte Batterie grundsätzlich unabhängig von einem Batterie-Management-System oder einer geborstenen Berstmembran erkannt werden. Allerdings können Daten aus dem Batterie-Management-System oder das Erkennen einer geborstenen Berstmembran zusätzlich herangezogen werden. Zudem ermöglicht die Analyse der Innenraumluft eine nahezu hinreichende Bestimmung eines Schadens der Batterie, das heißt einer schadhaften Batterie.

Die Erfindung stellt somit ein möglichst minimalinvasives Verfahren bereit, bei welchem die Zusammensetzung der Innenraumluft wenigstens teilweise zum Erkennen des Vorhandenseins eines Schadens verwendet wird. Dadurch wird eine sichere Erkennung und Bewertung des Zustandes der Batterie ermöglicht. Weiterhin kann das Verfahren in sehr hohem Durchsatz in kurzer Zeit angewendet werden, sodass dieses besonders für Recyclingverfahren von Batterien vorteilhaft ist. Dadurch wird ein verbessertes automatisiertes Recyclingverfahren von Batterien bereitgestellt.

Das erfindungsgemäße Verfahren zum Recycling einer oder mehrerer Batterien, ist gekennzeichnet dadurch, dass schadhafte Batterien nach einem Verfahren gemäß der vorliegenden Erfindung und/oder einer ihrer Ausgestaltungen erkannt werden, wobei für das Recycling von schadhaften Batterien festgelegte Sicherheitsmaßnahmen durchgeführt werden.

Hierbei werden die genannten Sicherheitsmaßnahmen bevorzugt nicht für schadfreie beziehungsweise nicht für als schadfrei erkannte Batterien durchgeführt, sondern lediglich für schadhafte beziehungsweise für als schadhaft erkannte Batterien durchgeführt.

Es ergeben sich zum erfindungsgemäßen Verfahren gleichartige, gleichwertige und gleichwirkende Vorteile und/oder Ausgestaltungen des erfindungsgemäßen Recyclingverfahrens.

Gemäß einer vorteilhaften Ausgestaltung der Erfindung wird zur Entnahme der Probe eine Öffnung in das Gehäuse der Batterie eingebracht.

Mit anderen Worten wird die Batterie zur Probenentnahme an wenigstens einer Stelle geöffnet. Hierbei ist die Öffnung bevorzugt so klein wie möglich auszugestalten. Dadurch kann das Risiko der Öffnung reduziert werden. Ein Vorteil der Analyse über die Innenraumluft ist, dass bereits kleine Öffnungen zur Probenentnahme ausreichend sind.

In einer vorteilhaften Weiterbildung der Erfindung wird die Öffnung im Bereich einer Berstmembran der Batterie eingebracht.

Bei bereits geborstener Berstmembran (oder äquivalent Berstscheibe) kann die dadurch entstandene Öffnung unmittelbar verwendet werden. Ein zusätzliches Öffnen der Batterie ist demnach nicht erforderlich, kann jedoch ergänzend vorgesehen sein. Ist die Berstmembran intakt, so wird bevorzugt die Berstmembran als Öffnung verwendet beziehungsweise die Öffnung wird im Bereich der Berstmembran eingebracht. Beispielsweise wird ein Loch in die Berstmembran gestochen oder gebohrt. Das ist deshalb von Vorteil, da die Berstmembran bereits eine Sollbruchstelle der Batterie ausbildet. Dadurch kann der Aufwand zum Öffnen der Batterie verringert werden. Zudem ist das Öffnen der Batterie im Bereich der Berstmembran vorteilhafterweise sicherer.

Gemäß einer vorteilhaften Ausgestaltung der Erfindung wird die Öffnung mittels einer Hohlnadel, eines Schlauches und/oder mittels eines Bohrers eingebracht.

Mit anderen Worten wird die Öffnung in die Batterie gestochen, gestoßen oder gebohrt. Besonders bevorzugt wird eine Hohlnadel verwendet, die in die Batterie gestochen wird und bei welcher gleichzeitig eine Probenentnahme der Innenraumluft über dieselbe Nadel/Hohlnadel, beispielsweise durch ein teilweises Absaugen der Innenraumluft, erfolgen kann. Alternativ oder ergänzend wird die Öffnung in das Gehäuse der Batterie gebohrt. Hiermit ist jedoch ein höherer Aufwand aufgrund des Gehäusematerials (typischerweise Edelstahl) verbunden.

In einer vorteilhaften Weiterbildung der Erfindung wird zur Analyse der Innenraumluft ein Gassensor und/oder ein Partikelsensor verwendet.

Vorteilhafterweise werden dadurch bekannte, effiziente und kostengünstige Messvorrichtungen zur Analyse verwendet. Diese können ausreichend sein, da typischerweise bereits das grundsätzliche Vorhandensein, das heißt die Detektion einer Substanz, hinreichend für eine schadhafte Batterie ist.

Gemäß einer vorteilhaften Ausgestaltung der Erfindung erfolgt die Analyse bezüglich organischer Lösungsmittel und/oder bezüglich Rußpartikel.

Mit anderen Worten ist die für die Analyse vorgesehene Messeinrichtung, beispielsweise ein Gassensor und/oder Partikelsensor, dazu ausgebildet, das Vorhandensein von organischen Lösungsmittel und/oder Rußpartikel zu erfassen.

Die Detektion organischer Lösungsmittel als Indikator einer schadhaften Batterie zu verwenden ist deshalb von Vorteil, da diese typischerweise bei einem Elektrolytleck entstehen beziehungsweise freigesetzt werden.

Die Detektion von Rußpartikel als Indikator einer schadhaften Batterie ist deshalb von Vorteil, da diese typischerweise bei einem thermischen Ereignis oder einem Brand innerhalb der Batterie entstehen beziehungsweise freigesetzt werden.

In einer vorteilhaften Weiterbildung der Erfindung wird zusätzlich die Art des Schadens in Abhängigkeit der ermittelten Substanzen und/oder ihrer Konzentrationen ermittelt.

Mit anderen Worten wird die Art des Schadens ermittelt, beispielswiese Elektrolytleck oder Brand, wobei hierbei die detektierte Substanz einen Rückschluss auf die Art des Schadens ermöglicht. Werden beispielsweise organische Lösungsmittel detektiert beziehungsweise erfasst, so kann auf ein Elektrolytleck geschlossen werden. Werden beispielsweise Rußpartikel detektiert beziehungsweise erfasst, so kann auf einen Brand geschlossen werden. Je nach Schadensart kann eine unterschiedliche Behandlung der Batterie, insbesondere im Rahmen eines Recyclingverfahrens, erfolgen.

Gemäß einer vorteilhaften Ausgestaltung der Erfindung umfassen die Sicherheitsmaßnahmen beim Recyclingverfahren wenigstens eine teilweise Zerlegung der Batterie in einem Schutzraum.

Mit anderen Worten wird eine als schadhafte erkannte Batterie im Gegensatz zu einer als schadfrei erkannten Batterie in einen besonders geschützten beziehungsweise gesicherten Raum zerlegt. Eine manuelle Zerlegung von schadhaften Batterien kann ebenfalls vorgesehen sein.

In einer vorteilhaften Weiterbildung der Erfindung ist die Batterie als Lithium-Ionen-Batterie ausgebildet.

Mit anderen Worten ist die vorliegende Erfindung besonders bevorzugt für Lithium-Ionen-Batterien geeignet.

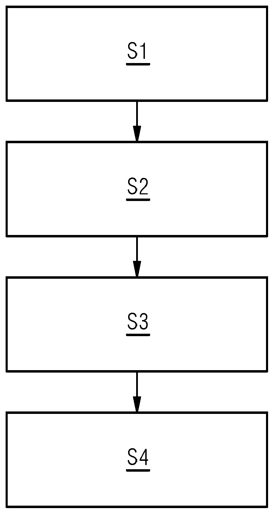

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Ablaufdiagramm eines Verfahrens gemäß einer Ausgestaltung der Erfindung.

Gleichartige, gleichwertige oder gleichwirkende Elemente können in der Figur mit denselben Bezugszeichen versehen sein.

Die Figur zeigt ein Verfahren zur Erkennung einer schadhaften Batterie im Rahmen eines Recyclings der Batterie.

Für ein sicheres Recycling der Batterie beziehungsweise von Batterien ist es wichtig, schadhafte Batterien zu erkennen und gesondert zu behandeln.

Zum Erkennen eines Schadens beziehungsweise eines Fehlers der Batterie, der typischerweise von außen nicht erkennbar ist, wird in einem ersten Schritt S1 des Verfahrens eine Öffnung in ein Gehäuse der Batterie eingebracht. Besonders bevorzugt wird hierzu eine Hohlnadel verwendet. Weiterhin wird die Öffnung bevorzugt im Bereich einer Berstmembran der Batterie eingebracht. Insbesondere erfolgt das Einbringen der Öffnung durch ein Durchstechen der Berstmembran mittels einer Hohlnadel.

In einem zweiten Schritt S2 des Verfahrens erfolgt eine Probenentnahme der Innenraumluft der Batterie über die eingebrachte Öffnung. Bei Verwendung einer Hohlnadel kann die Probe der Innenraumluft vorteilhafterweise direkt entnommen werden.

In einem dritten Schritt S3 des Verfahrens wird die entnommene Probe der Innenraumluft auf ein Vorhandensein bestimmter Substanzen, insbesondere auf ein Vorhandensein von organischen Lösungsmitteln und/oder Rußpartikeln analysiert, die einen Rückschluss auf einen Schaden der Batterie ermöglichen. Können keine solchen Substanzen bei der Analyse erkannt werden beziehungsweise liegt deren Konzentration unterhalb eines Schwellenwertes, so wird die Batterie als schadfrei erkannt. Werden hingegen die genannten Substanzen erfasst beziehungsweise weisen diese eine Konzentration oberhalb eines festgelegten Schwellenwertes auf, so wird die Batterie als schadhaft erkannt.

In einem vierten Schritt S4 des Verfahrens erfolgt das Recycling, insbesondere die wenigstens teilweise Zerlegung der Batterie. Hierbei wird zwischen schadfreien und schadhaften Batterien unterschieden, das heißt für schadhafte Batterien beziehungsweise für als schadhaft erkannte Batterie sind besondere Sicherheitsmaßnahmen, beispielsweise ihre Zerlegung in einem geschützten Raum, vorgesehen.

Das beschriebene Verfahren ermöglicht somit ein sichereres und verbessertes Recycling von Batterien.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- S1: erster Schritt
- S2: zweiter Schritt
- S3: dritter Schritt
- S4: vierter Schritt

## Patentansprüche

1. Verfahren zur Erkennung einer schadhaften Batterie, wobei die Batterie ein Gehäuse mit wenigstens einem Innenraum aufweist, **gekennzeichnet dadurch, dass** eine Probe der Innenraumluft des Innenraumes entnommen und bezüglich einer oder mehrerer Substanzen analysiert wird, wobei in Abhängigkeit der ermittelten Substanzen und/oder ihrer Konzentrationen erkannt wird, ob die Batterie schadhaft ist.

2. Verfahren gemäß Anspruch 1, **gekennzeichnet dadurch, dass** zur Entnahme der Probe eine Öffnung in das Gehäuse der Batterie eingebracht wird.

3. Verfahren gemäß Anspruch 2, **gekennzeichnet dadurch, dass** die Öffnung im Bereich einer Berstmembran der Batterie eingebracht wird.

4. Verfahren gemäß Anspruch 2 oder 3, **gekennzeichnet dadurch, dass** die Öffnung mittels einer Hohlnadel, eines Schlauches und/oder mittels eines Bohrers eingebracht wird.

5. Verfahren gemäß einem der vorhergehenden Ansprüche, **gekennzeichnet dadurch, dass** zur Analyse der Innenraumluft ein Gassensor und/oder ein Partikelsensor verwendet wird.

6. Verfahren gemäß einem der vorhergehenden Ansprüche, **gekennzeichnet dadurch, dass** die Analyse bezüglich organischer Lösungsmittel und/oder bezüglich Rußpartikel erfolgt.

7. Verfahren gemäß einem der vorhergehenden Ansprüche, **gekennzeichnet dadurch, dass** zusätzlich die Art des Schadens in Abhängigkeit der ermittelten Substanzen und/oder ihrer Konzentrationen ermittelt wird.

8. Verfahren zum Recycling einer oder mehrerer Batterien, **gekennzeichnet dadurch, dass** schadhafte Batterien nach einem Verfahren gemäß einem der vorhergehenden Ansprüche erkannt werden, wobei für das Recycling von schadhaften Batterien festgelegte Sicherheitsmaßnahmen durchgeführt werden.

9. Verfahren gemäß Anspruch 8, **gekennzeichnet dadurch, dass** die Sicherheitsmaßnahmen eine wenigstens teilweise Zerlegung der Batterie in einem Schutzraum umfassen.

10. Verfahren gemäß Anspruch 8 oder 9, **gekennzeichnet dadurch, dass** die Batterie als Lithium-Ionen-Batterie ausgebildet ist.
